# FASCICULE DE BREVET EUROPEEN

(11) **EP 0 678 681 B1**
(45) Date de publication et mention de la délivrance du brevet: **23.09.1998**
(21) Numéro de dépôt: 95400434.7
(22) Date de dépôt: 01.03.1995
(51) Int. Cl.: F16C 7/02

(54) **Bielle en matière composite et procédé pour sa fabrication**
Pleuelstange aus Verbundwerkstoff und Verfahren zur Herstellung
Connecting rod made of composite material and method for manufacturing the same

(30) Priorité: 18.04.1994 FR 9404585
(43) Date de publication de la demande: 25.10.1995
(73) Titulaire: AEROSPATIALE Société Nationale Industrielle, 75781 Paris Cédex 16 (FR)
(72) Inventeur: Fantino, Lucien, F-33700 Merignac (FR); Cahuzac, Georges, F-33110 Le Bouscat (FR)
(74) Mandataire: Bonnetat, Christian

(56) Documents cités:
- EP-A- 0 031 413
- EP-A- 0 398 841
- EP-A- 0 553 000
- DE-A- 3 726 340
- FR-A- 2 654 483
- GB-A- 2 178 820
- US-A- 4 416 929
- US-A- 5 156 396

## Description

La présente invention concerne une bielle en matière composite, notamment pour des moteurs à combustion interne, ainsi qu'un procédé pour fabriquer une telle bielle.

Une telle bielle est une pièce allongée comportant, outre un corps central, une tête, plus large, qui est la partie de la bielle se trouvant du côté du vilebrequin, et un pied, plus étroit, qui est la partie de la bielle se trouvant du côté du piston. Pour le montage, la tête doit pouvoir s'ouvrir et comporte donc deux éléments solidarisés par deux vis, lesquelles exercent une contrainte importante sur la surface de l'élément sur laquelle elles sont serrées. La bielle est une pièce ayant une direction privilégiée d'effort, et devant présenter une bonne raideur empêchant les déformations autour des alésages du pied et de la tête.

On connaît déjà, par exemple par le brevet FR-A-2 654 483, une bielle réalisée en matière composite. Par matière composite, on comprend une matière comportant une armature de fils ou de fibres, noyée dans une matrice de matière synthétique durcie. Une telle matière composite, outre le gain de poids qu'elle procure, présente une excellente tenue aux efforts mécaniques, une résistance élevée à la corrosion, et un excellent comportement aux températures élevées. Dans le brevet FR-A-2 654 483, cependant, ces propriétés des matières composites ne sont pas entièrement exploitées du fait que, dans ce cas, le corps, le pied et la tête de la bielle sont réalisés sous forme de pièces séparées, reliées par collage et bobinage d'un fil, formant une sangle. En outre, une telle réalisation est complexe et doit être mise en oeuvre en plusieurs étapes, ce qui empêche une production efficace en série de telles bielles.

Une bielle selon la première partie de la revendication 1 est connue du document DE-A-37 26 340.

La présente invention concerne une bielle en matière composite, dont la structure permet, d'une part, d'exploiter à plein les propriétés des matières composites et, d'autre part, de fabriquer facilement et rapidement un grand nombre de telles pièces.

A cet effet, la bielle en matière composite, notamment pour des moteurs à combustion interne, ladite matière composite étant formée d'une armature noyée dans une matière durcie, et ladite bielle comprenant, suivant l'extension longitudinale de la bielle, un corps central prolongé, à ses deux extrémités, par une tête de bielle et un pied de bielle, respectivement, ladite bielle étant réalisée entièrement et en une seule pièce en matière composite, et l'armature de ladite matière composite comprenant des nappes superposées de fils de tramage rectilignes croisés, est remarquable, selon l'invention, en ce que les fils de tramage, qui s'étendent parallèlement à l'extension longitudinale de la bielle, constituent au moins deux fois le pourcentage volumique des fils de tramage qui s'étendent dans chacune des directions différentes de l'extension longitudinale de la bielle, et en ce que des fils de solidarisation traversent lesdites nappes superposées.

Aussi, l'armature de la bielle en matière composite selon l'invention présente un renforcement dans la direction d'effort maximal, c'est-à-dire l'extension longitudinale de la bielle, et, de plus, comme la bielle est réalisée en une seule pièce de matière composite, elle est simple à fabriquer et les propriétés de la matière composite peuvent être exploitées au maximum.

Avantageusement, considérant que les fils de tramage de l'armature s'étendant parallèlement à l'extension longitudinale de la bielle sont les fils de direction 0°, les autres fils de tramage de l'armature s'étendent suivant les direc tions 45°, 90° et 135°.

En particulier, l'armature peut comprendre autant de fils de tramage de direction 0° que de fils de tramage s'étendant suivant les trois autres directions 45°, 90° et 135°.

De préférence, par rapport au volume total de la matière composite incluant l'armature et la matrice durcie, le pourcentage volumique des fils de tramage est compris entre 40% et 60%, et le pourcentage volumique des fils de solidarisation est compris entre 1% et 10%.

En particulier, le pourcentage volumique des fils de tramage de direction 0° est au moins sensiblement égal à 27%, tandis que le pourcentage volumique des fils de tramage de directions 45°, 90° et 135° est au moins sensiblement égal, à chaque fois, à 9%.

Par ailleurs, le pourcentage volumique des fils de solidarisation peut être au moins sensiblement égal à 3%.

Avantageusement, pour chaque série de nappes, les fils de tramage sont disposés selon la succession suivante : fils de direction 0°, fils de direction 45°, fils de direction 0°, fils de direction 90°, fils de direction 0° et fils de direction 135°.

Selon une autre caractéristique préférencée, des fils de tramage supplémentaires de direction 90° sont prévus dans la zone de la tête de bielle, augmentant son épaisseur.

De préférence, lesdits fils de tramage supplémentaires de direction 90° sont intégrés dans chacune desdites séries de nappes.

Selon encore d'autres caractéristiques préférencées, des fils de tramage de direction 0°, contournant le pied de bielle, peuvent être incorporés entre lesdites séries de nappes, et/ou des fils, contournant le pied de bielle, peuvent être disposés par piquage sur les chants dudit pied de bielle.

La présente invention concerne également un procédé pour fabriquer une bielle en matière composite, qui vient d'être décrite, remarquable, selon l'invention, en ce que :
a) on réalise une armature pour une plaque de matière composite, ladite armature comprenant des nappes superposées de fils de tramage rectilignes croisés, les fils de tramage, qui s'étendent parallèlement à une première direction, constituant au moins deux fois le pourcentage volumique des fils de tramage qui s'étendent dans chacune des autres directions, et des fils de solidarisation traversant lesdites nappes superposées ;
b) on imprègne ladite armature d'une matière synthétique destinée à former la matrice de ladite plaque de matière composite ;
c) on fait durcir ladite résine synthétique de façon à former ladite plaque de matière composite ;
d) on découpe ladite plaque de matière composite de façon à obtenir des ébauches de bielle, ladite première direction correspondant à l'extension longitudinale desdites ébauches ; et
e) on usine chaque ébauche de bielle ainsi obtenue à son état final.

En particulier, considérant que les fils de tramage de l'armature s'étendant suivant ladite première direction sont les fils de direction 0°, les autres fils de tramage de l'armature s'étendent suivant les directions 45°, 90° et 135°.

De préférence, dans l'étape a), on dépose autant de fils de tramage de direction 0° que de fils de tramage s'étendant suivant les trois autres directions 45°, 90° et 135°.

Avantageusement, pour chaque série de nappes, on dépose les fils de tramage selon la séquence suivante : fils de direction 0°, fils de direction 45°, fils de direction 0°, fils de direction 90°, fils de direction 0° et fils de direction 135°.

Selon une autre caractéristique préférencée, dans l'étape a), on dépose des fils de tramage supplémentaires de direction 90° dans la zone correspondant aux têtes de bielles.

De préférence, dans ce cas, la dépose desdits fils de tramage supplémentaires de direction 90° est effectuée au moment de la réalisation de chacune desdites séries de nappes.

Selon encore une autre caractéristique avantageuse, entre lesdites séries de nappes, on dépose des fils de tramage de direction 0°, contournant les emplacements prévus pour les pieds de bielle.

En particulier, l'étape d) peut être effectuée avant les étapes b) et c), pour permettre ainsi, après l'étape d), de piquer des fils dans l'armature, contournant le pied de bielle, sur les chants de ce dernier.

Les figures du dessin annexé feront bien comprendre comment l'invention peut être réalisée. Sur ces figures, des références identiques désignent des éléments semblables.

La figure 1 est une vue de face d'une bielle réalisée conformément à l'invention.

La figure 2 est une vue de côté de la figure 1.

La figure 3 est une vue de dessus d'une plaque à partir de laquelle sont découpées les bielles de l'invention.

La figure 4 est la coupe transversale IV-IV de la figure 3.

Les figures 5A-5F illustrent les différentes phases de la formation d'une série de nappes de fils selon l'invention.

La figure 6 montre le piquage des nappes superposées.

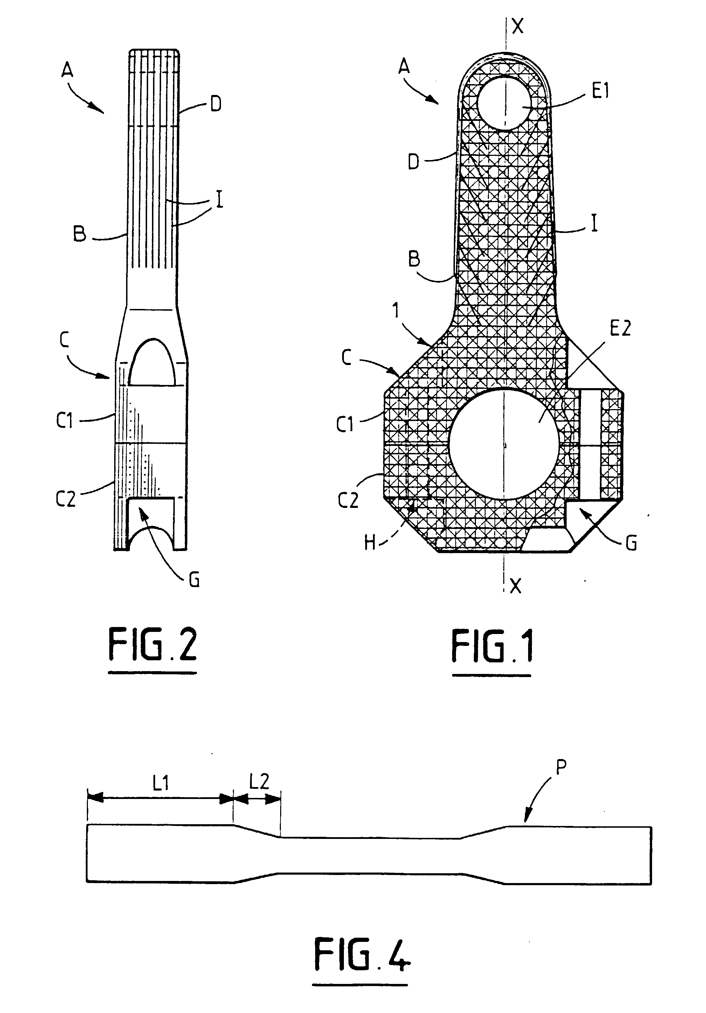

Les figures 1 et 2 montrent une bielle en matière composite A selon l'invention, notamment pour des moteurs à combustion interne. Comme déjà indiqué, la matière composite en question est formée d'une armature de fils (en carbone, verre, bore, notamment) noyée dans une matrice de matière synthétique durcie. On notera que, pour des raisons d'illustration, il est montré de façon schématique, sur les figures 1 et 2, le réseau des fils de l'armature qui n'apparaît bien évidemment pas, aussi clairement, lorsque l'armature est noyée dans la matrice.

De façon classique, la bielle A comprend, suivant l'extension longitudinale X-X de celle-ci, un corps central B prolongé, à ses deux extrémités, par une tête de bielle C et un pied de bielle D, respectivement, comportant chacun un alésage E1,E2 pour relier la bielle, d'une part, au vilebrequin et, d'autre part, au piston. La tête de bielle C, pour le montage, doit pouvoir s'ouvrir et comporte donc deux éléments C1,C2 solidarisés par des vis (non représentées) et présentant, pour cela, des taraudages G,H. Comme déjà indiqué, une telle bielle est une pièce ayant une direction privilégiée d'effort (son extension longitudinale X-X), et doit présenter une bonne raideur empêchant les déformations autour des alésages du pied et de la tête.

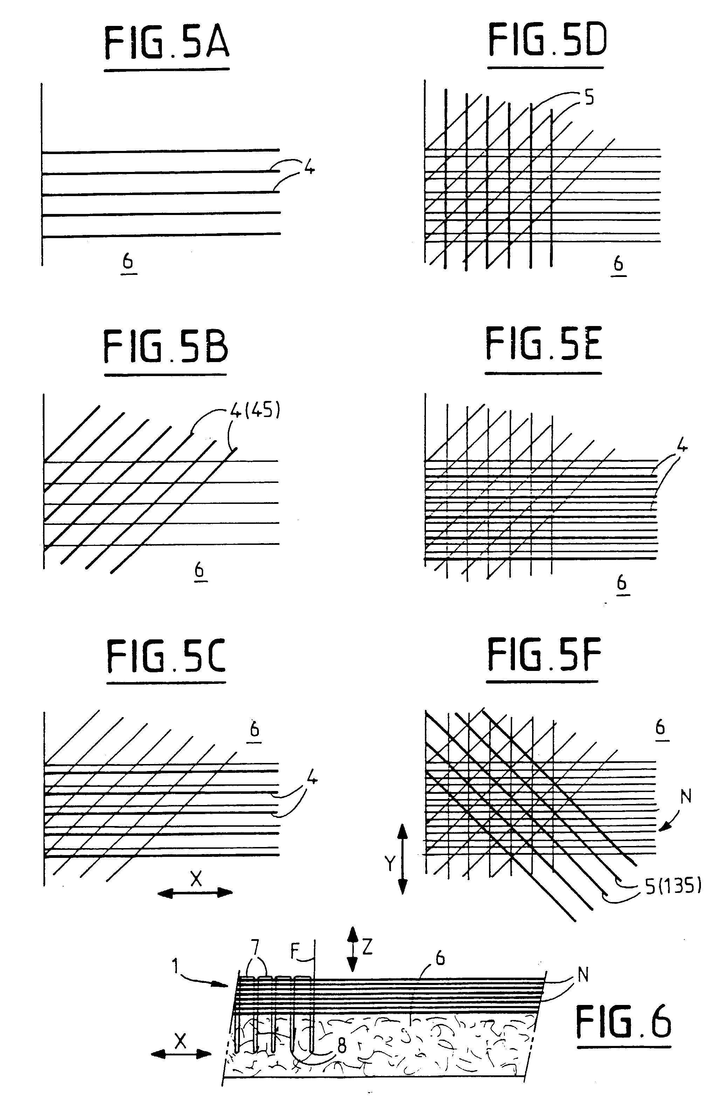

Selon l'invention, la bielle A est réalisée entièrement et en une seule pièce en matière composite, et l'armature 1 de la matière composite comprend des nappes superposées de fils de tramage rectilignes croisés, les fils de tramage, qui s'étendent parallèlement à l'extension longitudinale X-X de la bielle A, constituant au moins deux fois le pourcentage volumique des fils de tramage qui s'étendent dans chacune des directions différentes de l'extension longitudinale X-X de la bielle, et, par ailleurs, des fils de solidarisation F traversent lesdites nappes superposées, en formant des points de piqûre 7 à boucles ouvertes 8 (figure 6) à l'aide d'une aiguille, non représentée sur la figure 6. La réalisation d'une série de nappes N sera décrite en détail ci-après en regard des figures 5A-5F. Par série de nappes, on comprend une succession répétitive de nappes comme expliqué ci-après.

Par rapport au volume total de la matière composite incluant l'armature et la matrice durcie, le pourcentage volumique des fils de tramage est compris entre 40% et 60%, et le pourcentage volumique des fils de solidarisation est compris entre 1% et 10%. Par exemple, considérant que les fils de tramage de l'armature s'étendant parallèlement à l'extension longitudinale de la bielle sont les fils de direction 0° et que les autres fils de tramage de l'armature s'étendent suivant les directions 45°, 90° et 135°, l'armature comprend autant de fils de tramage de direction 0° que de fils de tramage s'étendant suivant les trois autres directions 45°, 90° et 135°.

A titre d'exemple, le pourcentage volumique des fils de tramage de direction 0° est au moins sensiblement égal à 27%, tandis que le pourcentage volumique des fils de tramage de directions 45°, 90° et 135° est au moins sensiblement égal, à chaque fois, à 9%. Le pourcentage volumique des fils de solidarisation, quant à lui, peut être au moins sensiblement égal à 3%.

Pour fabriquer la bielle A en matière composite de l'invention, on procède généralement de la façon suivante :
a) on réalise une armature pour une plaque de matière composite, ladite armature comprenant des nappes superposées de fils de tramage rectilignes croisés, les fils de tramage, qui s'étendent parallèlement à une première direction, constituant au moins deux fois le pourcentage volumique des fils de tramage qui s'étendent dans chacune des autres directions, et des fils de solidarisation traversant lesdites nappes superposées ;
b) on imprègne ladite armature d'une matière synthétique destinée à former la matrice de ladite plaque de matière composite ;
c) on fait durcir ladite résine synthétique de façon à former ladite plaque de matière composite ;
d) on découpe ladite plaque de matière composite de façon à obtenir des ébauches de bielle, ladite première direction correspondant à l'extension longitudinale desdites ébauches ; et
e) on usine chaque ébauche de bielle ainsi obtenue à son état final.

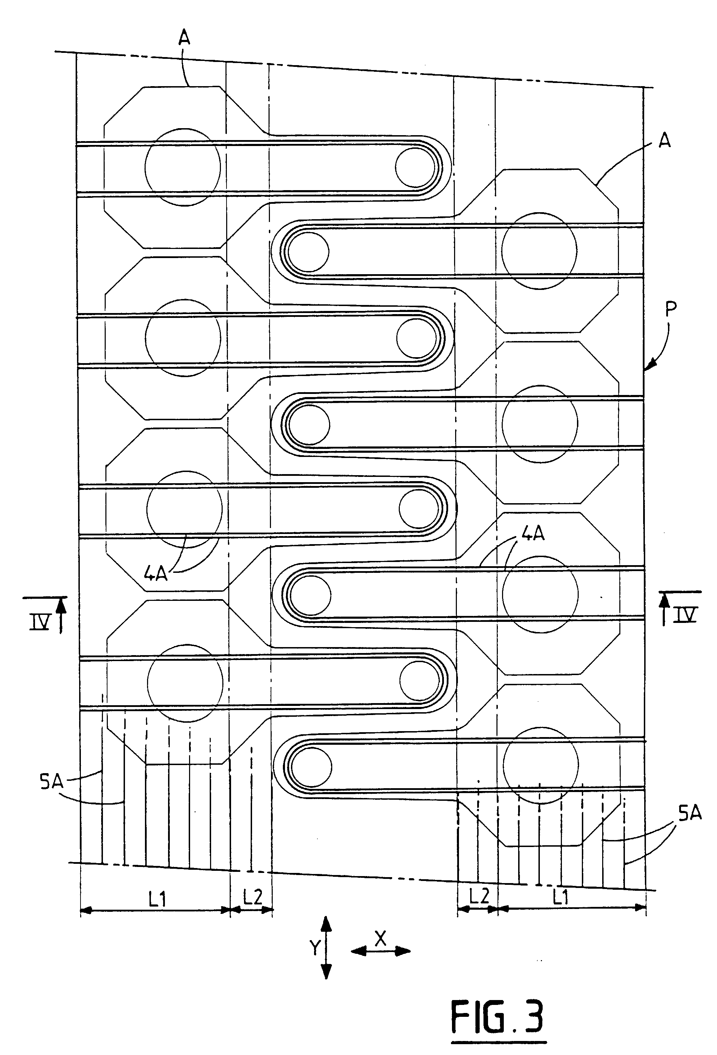

Les figures 3 et 4 montrent une telle plaque P dans laquelle des bielles A selon l'invention seront découpées. On voit, notamment sur la figure 3, que la conformation des bielles et la formation d'une plaque de forme géométrique simple permettent de fabriquer, de façon simple, un grand nombre de bielles, avec un minimum de déchets.

Les figures 5A-5F illustrent les différentes phases de la formation d'une série de nappes N de fils selon l'invention. Dans cet exemple, pour chaque série de nappes, on dépose les fils de tramage selon la séquence suivante : fils 4 de direction 0° (figure 5A), fils 4(45) de direction 45° (figure 5B), fils 4 de direction 0° (figure 5C), fils 5 de direction 90° (figure 5D), fils 4 de direction 0° (figure 5E), et fils 5(135) de direction 135° (figure 5F). La dépose des fils de tramage est effectuée sur un support 6, en supposant que la série de nappes en question, pour des raisons de clarté du dessin, est la première série de nappes déposée. La dépose des fils ci-dessus peut être effectuée d'une façon quelconque connue, mais avantageusement comme décrit dans les demandes de brevet français, déposées le 18 avril 1994, au nom de la demanderesse pour "Procédé et machine pour la réalisation d'une armature pour une pièce de matière composite" et "Procédé et machine pour la réalisation d'une armature en forme de plaque pour une pièce de matière composite".

On notera que l'épaisseur d'une série de nappes, c'est-à-dire de la couche constituée par les fils tramés dans les différentes directions définies ci-dessus, dépend du pas de dépose des fils et de la section des fils. A titre d'exemple pratique, cette épaisseur est d'environ 1 mm, et de telles séries de nappes seront superposées autant de fois que nécessaire suivant l'épaisseur de la pièce à obtenir.

Par ailleurs, pour augmenter l'épaisseur de la bielle dans les zones L1 (figure 3) correspondant aux têtes des bielles, des fils de tramage supplémentaires 5A de direction 90° sont déposés, pendant l'élaboration de chaque série de nappes, dans lesdites zones ainsi que dans les zones de transition L2. Cela permet d'obtenir directement, à la découpe, une pièce d'épaisseur variable, en évitant d'avoir à usiner les faces de celle-ci, pour cela.

De plus, entre deux séries de nappes successives, on peut déposer des fils de tramage 4A de direction 0°, contournant les emplacements prévus pour les pieds de bielle (figure 3).

Cela peut être effectué en plantant des picots de guidage des fils dans le support, lesquels sont enlevés au cours de l'opération de piquage (dépose des fils de solidarisation).

On peut également, après la découpe de la plaque en pièces élémentaires et avant imprégnation par la matrice, renforcer le pied de bielle par des fils I piqués dans l'armature, contournant le pied de bielle D, sur les chants de ce dernier (figures 1 et 2).

Pour la mise en oeuvre du procédé qui vient d'être décrit, on peut utiliser une machine programmable, dont des exemples de réalisation particuliers sont décrits dans les demandes de brevet français citées ci-dessus.

Pour les nappes dont les fils ont des trajectoires droites et simples, l'opérateur de la machine utilise l'appel par un programme principal de ces directions.

Un premier programme crée les données nécessaires au tramage de nappes simples en accord avec un outillage. L'opérateur introduit dans ce programme les données de l'outillage : longueur, largeur, pas des picots périphériques.

Ce programme crée sur une disquette :
- quatre fichiers pour la direction 0°,
- quatre fichiers pour la direction 90°,
- deux fichiers pour la direction 45°,
- deux fichiers pour la direction 135°.

En effet, les nappes de directions 0° et 90° peuvent être réalisées en partant de l'un des quatre angles de l'outillage, alors que les nappes de directions 45° et 135° ne peuvent partir que de deux angles opposés.

Pour une pièce particulière, l'opérateur crée un programme qui appelle successivement les diverses nappes à tramer, en respectant l'enchaînement des points d'arrivée et de départ.

Par ailleurs, un programme particulier créera les fichiers correspondant à la dépose de nappes de fils dans des directions autres que celles énoncées ci-dessus.

Les trajectoires de fils particulières sont en général suffisamment simples pour être programmées par apprentissage par l'opérateur, puis appelées par le programme principal.

La fonction du piquage est appelée par le programme de piquage. Au cours de l'exécution de chaque point, la longueur de fil utilisée est mesurée et comparée à la valeur demandée écrite dans le programme de piquage.

Pour réaliser la plaque, après avoir placé sur la machine le cadre de tramage voulu, l'opérateur introduit, dans le lecteur de disquette de la machine, la disquette correspondant au cadre utilisé et appelle le programme principal définissant cette plaque.

Il introduit les fils dans l'outil de dépose et colle avec un ruban adhésif leur extrémité sur le cadre.

Le tramage est réalisé automatiquement et ne nécessite l'intervention de l'opérateur :
- qu'après exécution d'un motif de six nappes (une série de nappes) en cas d'utilisation d'un cadre à picots périphériques droits, ce qui exige de tasser les fils sur ces picots,
- ou en cas de détection par la machine de l'absence de fil (bobine vide).

En fin de tramage, l'opérateur colle également l'extrémité des fils sur le cadre.

Le piquage est réalisé après avoir placé sur la face opposée à l'outil de piquage un matériau tendre apte à laisser passer l'extrémité de l'aiguille. Ce piquage peut être réalisé sur une face, puis la plaque peut être retournée pour être piquée sur la seconde face. Les points de piquage peuvent être réalisés de manière à être situés aux endroits les plus judicieux pour la tenue de la pièce, en particulier des deux côtés des trous des vis reliant la tête de bielle au corps.

La découpe de chaque pièce dans la plaque peut être faite avant imprégnation. C'est indispensable pour pouvoir disposer des fils I tournant autour du pied, par piquage sur les faces latérales (chants). Cette découpe est réalisée par sciage ou par une machine à jet d'eau.

L'imprégnation de ces pièces est réalisée suivant le cycle :
- mise de la pièce dans un moule,
- mise sous vide du moule,
- injection de la résine,
- montée en température avec maintien d'une pression jusqu'à la prise de la résine,
- démoulage de l'ébauche, et
- post-cuisson en étuve hors du moule.

L'usinage est identique à celui de toute pièce mécanique. En général, il est réalisé avec des meules au diamant. Dans le cas où la pièce est réalisée dans une plaque avec les variations d'épaisseur prévus dès le tramage et que l'imprégnation est réalisée dans un moule aux cotes voulues, l'usinage peut être réduit à la séparation de la tête en deux éléments, et au perçage des trous et des taraudages des vis de fixation.

## Revendications

1. Bielle en matière composite, notamment pour des moteurs à combustion interne, ladite matière composite étant formée d'une armature noyée dans une matière durcie, et ladite bielle (A) comprenant, suivant l'extension longitudinale (X-X) de la bielle, un corps central (B) prolongé, à ses deux extrémités, par une tête de bielle (C) et un pied de bielle (D), respectivement,
ladite bielle (A) étant réalisée entièrement et en une seule pièce en matière composite, et l'armature de ladite matière composite comprenant des nappes superposées de fils de tramage rectilignes croisés, caractérisé en ce que les fils de tramage, qui s'étendent parallèlement à l'extension longitudinale (X-X) de la bielle (A), constituent au moins deux fois le pourcentage volumique des fils de tramage qui s'étendent dans chacune des directions différentes de l'extension longitudinale (X-X) de la bielle (A), et en ce que des fils de solidarisation traversent lesdites nappes superposées.

2. Bielle en matière composite selon la revendication 1,
caractérisée en ce que, considérant que les fils de tramage de l'armature s'étendant parallèlement à l'extension longitudinale (X-X) de la bielle (A) sont les fils de direction 0°, les autres fils de tramage de l'armature s'étendent suivant les directions 45°, 90° et 135°.

3. Bielle en matière composite selon la revendication 2,
caractérisée en ce que l'armature comprend autant de fils de tramage (4) de direction 0° que de fils de tramage (4(45), 5, 5(135)) s'étendant suivant les trois autres directions 45°, 90° et 135°.

4. Bielle en matière composite selon la revendication 3, caractérisée en ce que, par rapport au volume total de la matière composite incluant l'armature et la matrice durcie, le pourcentage volumique des fils de tramage est compris entre 40% et 60%, et le pourcentage volumique des fils de solidarisation est compris entre 1% et 10%.

5. Bielle en matière composite selon la revendication 4, caractérisée en ce que le pourcentage volumique des fils de tramage de direction 0° est au moins sensiblement égal à 27%, tandis que le pourcentage volumique des fils de tramage de directions 45°, 90° et 135° est au moins sensiblement égal, à chaque fois, à 9%.

6. Bielle en matière composite selon la revendication 5, caractérisée en ce que le pourcentage volumique des fils de solidarisation est au moins sensiblement égal à 3%.

7. Bielle en matière composite selon l'une quelconque des revendications 2 à 6,
caractérisée en ce que, pour chaque série de nappes (N), les fils de tramage sont disposés selon la succession suivante : fils (4) de direction 0°, fils (4(45)) de direction 45°, fils (4) de direction 0°, fils (5) de direction 90°, fils (4) de direction 0° et fils (5(135)) de direction 135°.

8. Bielle en matière composite selon l'une quelconque des revendications 2 à 7,
caractérisée en ce que des fils de tramage supplémentaires (5A) de direction 90° sont prévus dans la zone de la tête de bielle (C), augmentant son épaisseur.

9. Bielle en matière composite selon la revendication 8, caractérisée en ce que lesdits fils de tramage supplémentaires (5A) de direction 90° sont intégrés dans chacune desdites séries de nappes (N).

10. Bielle en matière composite selon l'une quelconque des revendications 2 à 9,
caractérisée en ce que des fils de tramage (4A) de direction 0°, contournant le pied de bielle (D), sont incorporés entre lesdites séries de nappes (N).

11. Bielle en matière composite selon l'une quelconque des revendications 2 à 10,
caractérisée en ce que des fils (I), contournant le pied de bielle, sont disposés par piquage sur les chants dudit pied de bielle (D).

12. Procédé pour fabriquer une bielle en matière composite selon l'une quelconque des revendications 1 à 11,
caractérisé en ce que :
a) on réalise une armature pour une plaque (P) de matière composite, ladite armature comprenant des nappes superposées de fils de tramage rectilignes croisés, les fils de tramage, qui s'étendent parallèlement à une première direction, constituant au moins deux fois le pourcentage volumique des fils de tramage qui s'étendent dans chacune des autres directions, et des fils de solidarisation traversant lesdites nappes superposées ;
b) on imprègne ladite armature d'une matière synthétique destinée à former la matrice de ladite plaque (P) de matière composite ;
c) on fait durcir ladite résine synthétique de façon à former ladite plaque (P) de matière composite ;
d) on découpe ladite plaque (P) de matière composite de façon à obtenir des ébauches de bielle (A), ladite première direction correspondant à l'extension longitudinale (X-X) desdites ébauches ; et
e) on usine chaque ébauche de bielle (A) ainsi obtenue à son état final.

13. Procédé selon la revendication 12,
caractérisé en ce que, considérant que les fils de tramage de l'armature s'étendant suivant ladite première direction sont les fils de direction 0°, les autres fils de tramage de l'armature s'étendent suivant les directions 45°, 90° et 135°.

14. Procédé selon la revendication 13,
caractérisé en ce que, dans l'étape a), on dépose autant de fils de tramage (4) de direction 0° que de fils de tramage (4(45), 5, 5(135)) s'étendant suivant les trois autres directions 45°, 90° et 135°.

15. Procédé selon la revendication 13 ou la revendication 14,
caractérisé en ce que, pour chaque série de nappes (N), on dépose les fils de tramage selon la séquence suivante : fils (4) de direction 0°, fils (4(45)) de direction 45°, fils (4) de direction 0°, fils (5) de direction 90°, fils (4) de direction 0° et fils (5(135)) de direction 135°.

16. Procédé selon l'une quelconque des revendications 13 à 15,
caractérisé en ce que, dans l'étape a), on dépose des fils de tramage supplémentaires (5A) de direction 90° dans la zone correspondant aux têtes des bielles (C).

17. Procédé selon la revendication 16,
caractérisé en ce que la dépose desdits fils de tramage supplémentaires (5A) de direction 90° est effectuée au moment de la réalisation de chacune desdites séries de nappes (N).

18. Procédé selon l'une quelconque des revendications 13 à 17,
caractérisé en ce que, entre lesdites séries de nappes (N), on dépose des fils de tramage (4A) de direction 0°, contournant les emplacements prévus pour les pieds de bielle (D).

19. Procédé selon l'une quelconque des revendications 12 à 18,
caractérisé en ce que l'étape d) est effectuée avant les étapes b) et c).

20. Procédé selon la revendication 19,
caractérisé en ce que, après l'étape d), on pique des fils (I) dans l'armature, contournant le pied de bielle (D), sur les chants de ce dernier.

## Patentansprüche

1. Pleuelstange aus Verbundwerkstoff, insbesondere für Verbrennungsmotoren, wobei der Verbundwerkstoff aus einer Armierung gebildet wird, die in ein ausgehärtetes Material eingebettet ist, und die Pleuelstange (A) entsprechend der Längsausdehnung (X-X) der Pleuelstange einen mittleren Schaft (B) hat, der sich an seinen beiden Enden in einem Pleuelstangenkopf (C) bzw. einem Pleuelstangenfuß (D) fortsetzt, die Pleuelstange (A) vollständig und aus einem Stück aus Verbundwerkstoff hergestellt wird und die Armierung des Verbundwerkstoffs übereinanderliegende Matten gekreuzter geradliniger Einschußfäden hat,
dadurch gekennzeichnet, daß die Einschußfäden parallel zur Längsausdehnung (X-X) der Pleuelstange (A) mindestens den doppelten prozentualen Volumenanteil der Einschußfäden in jeder der von der Längsausdehnung (X-X) der Pleuelstange (A) unterschiedlichen Richtungen aufweisen, und dadurch, daß durch die übereinanderliegenden Matten Verbindungsfäden verlaufen.

2. Pleuelstange aus Verbundwerkstoff nach Anspruch 1,
dadurch gekennzeichnet, daß unter Berücksichtigung dessen, daß die Einschußfäden der Armierung parallel zur Längsausdehnung (X-X) der Pleuelstange (A) die Fäden in Richtung 0° sind, die anderen Einschußfäden der Armierung in den Richtungen 45°, 90° und 135° verlaufen.

3. Pleuelstange aus Verbundwerkstoff nach Anspruch 2,
dadurch gekennzeichnet, daß die Armierung ebenso viele Einschußfäden (4) in Richtung 0° wie Einschußfäden (4(45), 5, 5(135)) in den drei anderen Richtungen 45°, 90° und 135° hat.

4. Pleuelstange aus Verbundwerkstoff nach Anspruch 3,
dadurch gekennzeichnet, daß bezogen auf das Gesamtvolumen des Verbundwerkstoffs einschließlich Armierung und ausgehärteter Matrix der prozentuale Volumentanteil der Einschußfäden zwischen 40% und 60% und der prozentuale Volumenanteil der Verbindungsfäden zwischen 1% und 10% liegt.

5. Pleuelstange aus Verbundwerkstoff nach Anspruch 4,
dadurch gekennzeichnet, daß der prozentuale Volumenanteil der Einschußfäden in Richtung 0° mindestens etwa 27% beträgt, während der prozentuale Volumenanteil der Einschußfäden in den Richtungen 45°, 90° und 135° jeweils mindestens etwa 9% entspricht.

6. Pleuelstange aus Verbundwerkstoff nach Anspruch 5,
dadurch gekennzeichnet, daß der prozentuale Volumenanteil der Verbindungsfäden mindestens etwa 3% beträgt.

7. Pleuelstange aus Verbundwerkstoff nach einem der Ansprüche 2 bis 6,
dadurch gekennzeichnet, daß die Einschußfäden in jeder Mattenreihe (N) in nachstehender Reihenfolge angeordnet werden: Fäden (4) in Richtung 0°, Fäden (4(45)) in Richtung 45°, Fäden (4) in Richtung 0°, Fäden (5) in Richtung 90°, Fäden (4) in Richtung 0° und Fäden (5(135)) in Richtung 135°.

8. Pleuelstange aus Verbundwerkstoff nach einem der Ansprüche 2 bis 7,
dadurch gekennzeichnet, daß zusätzliche Einschußfäden (5A) in Richtung 90° im Bereich des Pleuelstangenkopfes (C) zur Erhöhung seiner Dicke vorgesehen werden.

9. Pleuelstange aus Verbundwerkstoff nach Anspruch 8,
dadurch gekennzeichnet, daß die zusätzlichen Einschußfäden (5A) in Richtung 90° in jede Mattenreihe (N) eingefügt werden.

10. Pleuelstange aus Verbundwerkstoff nach einem der Ansprüche 2 bis 9,
dadurch gekennzeichnet, daß um den Pleuelstangenfuß (D) herumgeführte Einschußfäden (4A) in Richtung 0° zwischen den Mattenreihen (N) eingefügt werden.

11. Pleuelstange aus Verbundwerkstoff nach einem der Ansprüche 2 bis 10,
dadurch gekennzeichnet, daß um den Pleuelstangenfuß herumgeführte Fäden (I) an den Schmalseiten des Pleuelstangenfußes (D) eingesteppt werden.

12. Verfahren zur Herstellung einer Pleuelstange aus Verbundwerkstoff nach einem der Ansprüche 1 bis 11,
dadurch gekennzeichnet, daß:
a) für eine Platte (P) aus Verbundwerkstoff eine Armierung hergestellt wird, wobei die Armierung übereinanderliegende Matten gekreuzter geradliniger Einschußfäden hat, die Einschußfäden parallel zu einer ersten Richtung mindestens den doppelten prozentualen Volumenanteil der Einschußfäden darstellen, die sich in jeder der anderen Richtungen erstrecken, und durch die übereinliegenden Matten Verbindungsfäden verlaufen;
b) die Armierung mit einem Kunststoff getränkt wird, der die Matrix der Platte (P) aus Verbundwerkstoff bildet;
c) das Kunstharz ausgehärtet wird, so daß es die Platte (P) aus Verbundwerkstoff bildet;
d) aus der Platte (P) aus Verbundwerkstoff Rohlinge der Pleuelstange (A) ausgeschnitten werden, wobei die erste Richtung der Längsausdehnung (X-X) der Rohlinge entspricht; und
e) jeder so erzielte Rohling der Pleuelstange (A) endbearbeitet wird.

13. Verfahren nach Anspruch 12,
dadurch gekennzeichnet, daß unter Berücksichtigung dessen, daß die Einschußfäden der Armierung in der ersten Richtung die Fäden in Richtung 0° sind, die anderen Einschußfäden der Armierung in den Richtungen 45°, 90° und 135° verlaufen.

14. Verfahren nach Anspruch 13,
dadurch gekennzeichnet, daß in der Stufe a) ebenso viele Einschußfäden (4) in Richtung 0° wie Einschußfäden (4(45), 5, 5(135)) in den drei anderen Richtungen 45°, 90° und 135° abgelegt werden.

15. Verfahren nach Anspruch 13 oder Anspruch 14,
dadurch gekennzeichnet, daß die Einschußfäden für jede Mattenreihe (N) in nachstehender Reihenfolge abgelegt werden: Fäden (4) in Richtung 0°, Fäden (4(45)) in Richtung 45°, Fäden (4) in Richtung 0°, Fäden (5) in Richtung 90°, Fäden (4) in Richtung 0° und Fäden (5(135)) in Richtung 135°.

16. Verfahren nach einem der Ansprüche 13 bis 15,
dadurch gekenzeichnet, daß in der Stufe a) zusätzliche Einschußfäden (5A) in Richtung 90° in dem Bereich abgelegt werden, der den Pleuelstangenköpfen (C) entspricht.

17. Verfahren nach Anspruch 16,
dadurch gekennzeichnet, daß die zusätzlichen Einschußfäden (5A) in Richtung 90° während der Herstellung jeder Mattenreihe (N) abgelegt werden.

18. Verfahren nach einem der Ansprüche 13 bis 17,
dadurch gekennzeichnet, daß zwischen den Mattenreihen (N) Einschußfäden (4A) in Richtung 0° abgelegt werden, die um die für die Pleuelstangenfüße (D) vorgesehenen Stellen herumgeführt werden.

19. Verfahren nach einem der Ansprüche 12 bis 18,
dadurch gekennzeichnet, daß die Stufe d) vor den Stufen b) und c) ausgeführt wird.

20. Verfahren nach Anspruch 19,
dadurch gekennzeichnet, daß nach der Stufe d) Fäden (I), die um den Pleuelstangenfuß (D) herumgeführt werden, an dessen Schmalseiten in die Armierung gesteppt werden.

## Claims

1. A connecting rod made of composite material, especially for internal-combustion engines, said composite material being formed by a reinforcement embedded in a cured material, and said connecting rod (A) comprising, along the longitudinal extension (X-X) of the connecting rod, a central shank (B) extended respectively, at its two ends, by a connecting-rod big end (C) and a connecting-rod small end (D),
said connecting rod (A) being produced entirely as a single component made of composite material, and the reinforcement of said composite material comprising superposed plies of crossed straight filling yarns, characterized in that the filling yarns, which extend parallel to the longitudinal extension (X-X) of the connecting rod (A), constitute at least twice the volume percentage of the filling yarns which extend in each of the directions other than the longitudinal extension (X-X) of the connecting rod (A) and in that binding yarns pass through said superposed plies.

2. The connecting rod made of composite material as claimed in claim 1,
characterized in that, assuming that the filling yarns of the reinforcement extending parallel to the longitudinal extension (X-X) of the connecting rod (A) are 0° direction yarns, the other filling yarns of the reinforcement extend along the 45°, 90° and 135° directions.

3. The connecting rod made of composite material as claimed in claim 2,
characterized in that the reinforcement comprises as many 0° direction filling yarns (4) as there are filling yarns (4(45), 5, 5(135)) extending along the other three, 45°, 90° and 135°, directions.

4. The connecting rod made of composite material as claimed in claim 3,
characterized in that, with respect to the total volume of the composite material, including the reinforcement and the cured matrix, the volume percentage of the filling yarns is between 40% and 60% and the volume percentage of the binding yarns is between 1% and 10%.

5. The connecting rod made of composite material as claimed in claim 4,
characterized in that the volume percentage of the 0° direction filling yarns is at least substantially equal to 27%, while the volume percentage of the 45°, 90° and 135° direction filling yarns is at least substantially equal, in each case, to 9%.

6. The connecting rod made of composite material as claimed in claim 5,
characterized in that the volume percentage of the binding yarns is at least substantially equal to 3%.

7. The connecting rod made of composite material as claimed in any one of claims 2 to 6,
characterized in that, for each series of plies (N), the filling yarns are arranged in the following sequence: 0° direction yarns (4), 45° direction yarns (4(45)), 0° direction yarns (4), 90° direction yarns (5), 0° direction yarns (4) and 135° direction yarns (5(135)).

8. The connecting rod made of composite material as claimed in any one of claims 2 to 7,
characterized in that herein additional 90° direction filling yarns (5A) are provided in the region of the connecting-rod big end (C), increasing its thickness.

9. The connecting rod made of composite material as claimed in claim 8,
characterized in that said additional 90° direction filling yarns (5A) are incorporated into each of said series of plies (N).

10. The connecting rod made of composite material as claimed in any one of claims 2 to 9,
characterized in that 0° direction filling yarns (4A), going around the connecting-rod small end (D), are incorporated between said series of plies (N).

11. The connecting rod made of composite material as claimed in any one of claims 2 to 10,
characterized in that yarns (I), going around the connecting-rod small end, are arranged, by stitching, along the edges of said connecting-rod small end (D).

12. A method for manufacturing a connecting rod made of composite material as claimed in any one of claims 1 to 11,
characterized in that:
a) a reinforcement for a sheet (P) of composite material is produced, said reinforcement comprising superposed plies of crossed straight filling yarns, the filling yarns, which extend parallel to a first direction, constituting at least twice the volume percentage of the filling yarns which extend in each of the other directions, and binding yarns passing through said superposed plies;
b) said reinforcement is impregnated with a synthetic material intended to form the matrix of said sheet (P) of composite material;
c) said synthetic resin is cured so as to form said sheet (P) of composite material;
d) said sheet (P) of composite material is cut so as to obtain connecting-rod (A) preforms, said first direction corresponding to the longitudinal extension (X-X) of said preforms; and
e) each connecting-rod (A) preform thus obtained is machined into its final state.

13. The method as claimed in claim 12,
characterized in that, assuming that the filling yarns of the reinforcement extending along said first direction are the 0° direction yarns, the other filling yarns of the reinforcement extend along the 45°, 90° and 135° directions.

14. The method as claimed in claim 13,
characterized in that, in step a), as many 0° direction filling yarns (4) are laid down as there are filling yarns (4(45), 5, 5(135)) extending along the other three, 45°, 90° and 135°, directions.

15. The method as claimed in claim 13 or claim 14, characterized in that, for each series of plies (N), the filling yarns are laid down according to the following sequence: 0° direction yarns (4), 45° direction yarns (4(45)), 0° direction yarns (4), 90° direction yarns (5), 0° direction yarns (4) and 135° direction yarns (5(135)).

16. The method as claimed in any one of claims 13 to 15,
characterized in that, in step a), additional 90° direction filling yarns (5A) are laid down in the region corresponding to the connecting-rod big ends (C).

17. The method as claimed in claim 16,
characterized in that said additional 90° direction filling yarns are laid down at the time of production of each of said series of plies (N).

18. The method as claimed in any one of claims 13 to 17,
characterized in that, between said series of plies (N), 0° direction filling yarns (4A), going around the places provided for the connecting-rod small ends (D), are laid down.

19. The method as claimed in any one of claims 12 to 18,
characterized in that step d) is carried out before steps b) and c).

20. The method as claimed in claim 19,
characterized in that, after step d), yarns (I) are stitched into the reinforcement, going around the connecting-rod small end (D), along the edges of the latter.
